# EUROPEAN PATENT APPLICATION

(11) **EP 3 696 636 A1**
(43) Date of publication of application: **19.08.2020**
(21) Application number: 19156630.6
(22) Date of filing: 12.02.2019
(51) Int. Cl.: G05B 19/418, G05B 17/02

(54) **VIRTUAL SENSOR FOR AN INDUSTRIAL CONTROL SYSTEM**

(71) Applicant: Siemens Aktiengesellschaft, 80333 München (DE)
(72) Inventor: The designation of the inventor has not yet been filed

(57) **Abstract**

The invention relates to a method and a system for providing a virtual sensor (VS1, VS2) for an industrial control system, the industrial control system comprising at least one industrial controller (PLC1, PLC2), the industrial controller (PLC1, PLC2) being connected to at least on real sensor (RS), the method comprising: combining a virtual sensor model description for the virtual sensor (VS1, VS2) and executable program code in a model container, loading the model container onto an industrial Edge Device (ED), the industrial Edge Device (ED) being connected to the at least one industrial controller (PLC1, PLC2), obtaining, from the industrial controller (PLC1, PLC2), sensor data of the at least one real sensor (RS), calculating, by executing the program code, virtual sensor data from the real sensor data, and providing the virtual sensor data to at least one target component of the industrial control system. Such a virtual sensor has real time access to process data and can use these to calculate virtual sensor data just in time. Any controller (PLC) can benefit and can in turn use the virtual sensor data for control purposes, e.g. optimizing an industrial process or production. The virtual sensor can be defined and deployed to the runtime environment, which is the Edge Device, with common means. Moreover, multiple virtual sensors and other software blocks can easily be glued together in the Edge Device. For this, the Edge Device can use technologies like Node Red. The virtual sensor runtime environment can advantageously be deployed in form of an app, thus be able to sandbox this runtime environment on the Edge Device, e.g. for security purposes.

## Description

Costumers are looking for alternatives to measure process variables on a machine or production line in several industrial applications, either because it is not possible to measure it with real sensors or because the cost on sensors might be impracticable. Besides, the reasons for not being possible to measure the process variables with real sensors are the most varied and includes cases of harsh environment, lack of space on the current layout of the machine, etc.

Problems with hardware sensors comprise time-consuming maintenance, need for calibration, aged deterioration, insufficient accuracy and many others.

For these situations, the virtual sensors concept can be applied. Virtual sensors are used to provide feasible and economical alternatives to costly or impractical physical measurement sensors. A virtual sensing system calculates an estimate of the quantity of interest based on the information available from other sensors and process parameters.

A system and a method for a virtual sensor for industrial applications are disclosed in US 2008/0312756 A1 - Grichnik et al. "Virtual sensor system and method".

Today, the concept of Digital Twin as solution for the named problems is established in industry, where it is revolutionizing processes along the entire value chain. However, in today's industry there are several simulation tools that are used for different domains, in the automotive sector for instance some different domains use specific simulation tools.

In this case, the OEM (Original Equipment Manufacturer) needs to integrate the different model parts developed by different suppliers and created in different simulation tools, which is time consuming and high effort.

Finally, the Digital Twin is most used during the engineering and commissioning phase, but it is not used during production/operation to generate additional value to the company. One reason for that is, that the computational power of common industrial controllers (PLC - programmable logic controller) is quite often not sufficient for that purpose. Moreover, common industrial controllers are programmed in typical PLC language. These languages are not optimized for the complex calculations needed for virtual sensing or running a Digital Twin and therefore establishing a virtual sensor is quite cumbersome on such platforms.

In summary, the following technical problems are evident:
- Impossibility to measure process variables with real physical sensors due to cost restriction, harsh environment conditions, etc.
- High effort in integrating models from different suppliers, developed in different simulation tools.
- High effort in connecting digital twin to collect data from the shop floor due to the variety of PLC suppliers existing with different protocols.
- Dawdle in not using Digital Twins in production/operation to add value such as monitor variables that are not measured with real sensors, feedback the engineering phase (closing the whole loop, running the digital twin in real time close to the shop floor and feedbacking the engineering phase with real time from the production), etc.
- To run the virtual sensor today it is necessary to invest on the connectivity layer to be able to get data from the factory floor which is quite huge effort as, for brownfield factory, there are different automation suppliers (i.e. PLC suppliers) with different protocols (i.e. EtherNET/IP, Profinet, etc.).
- Regarding the high effort in integrating models from different suppliers, this is today a challenge in industry and the FMI standard was first released in 2010 to fulfill this need. However, even with the availability of the standard today and with many simulation tools already being compliant with the standard (https://fmi-standard.org/tools), there are still no standard application to run the virtual sensors in real time close to the shop-floor.

Accordingly, it is a task for the current invention to propose a virtual sensor available to industrial controllers on shop floor level. It is a further task to make programming the virtual sensor easier and to provide connectivity to other virtual sensors and to other components of an industrial automation environment.

The solution for these problems is provided by the method and system as described in the independent patent claims. Advantageous embodiments are given by the dependent patent claims. Features of multiple claims can be combined for coming to further advantageous embodiments.

The solution focuses on enabling the usage of a simulation model, built in any FMI compliant tool, on the Edge layer based on an Edge platform. One key element is to bring together the FMI approach with the latest up-to-date technology with Edge computing, cloud computing and all IoT concept.

In particular, the solution comprises a method for providing a virtual sensor for an industrial control system,
the industrial control system comprising at least one industrial controller, the industrial controller being connected to at least on real sensor. The method comprises combining a virtual sensor model description for the virtual sensor and executable program code for the sensor model in a model container, loading the model container onto an industrial Edge Device, the industrial Edge Device being connected to the at least one industrial controller, obtaining, from the industrial controller, sensor data of the at least one real sensor, calculating, by executing the program code, virtual sensor data from the real sensor data, and providing the virtual sensor data to at least one target component of the industrial control system.

Such a virtual sensor has real time access to process or manufacturing data and can use these to calculate virtual sensor data just in time. Any controller (PLC) can benefit and can in turn use the virtual sensor data for control purposes, e.g. optimizing an industrial process or production / manufacturing. The virtual sensor can be defined and deployed to the runtime environment, which is on the Edge Device, with common means. Moreover, multiple virtual sensors and other software blocks can easily be glued together in the Edge Device. For this, the Edge Device can use technologies like Node Red. The virtual sensor runtime environment can advantageously be deployed in form of an app, thus be able to sandbox this runtime environment on the Edge Device, e.g. for security purposes.

The task is also solved by a system for providing a virtual sensor for an industrial control system, the industrial control system comprising at least one industrial controller, the industrial controller being connected to at least on real sensor, the system comprising an industrial Edge Device, the industrial Edge Device connected to the at least one industrial controller, the industrial Edge Device having a runtime environment for hosting at least one model container, the model container combining a virtual sensor model description for the virtual sensor and executable program code of the virtual sensor model, and the runtime environment being setup for execution of the executable program code. The runtime environment has access to the data of the real sensor("real sensor data"). The system is configured to obtain real sensor data, calculate, from the real sensor data, virtual sensor data by executing the program code, and to provide the calculated sensor data (virtual sensor data) to at least one target component of the industrial control system.

The system has the same advantages as the method described before.

The invention will further be explained by the following examples.

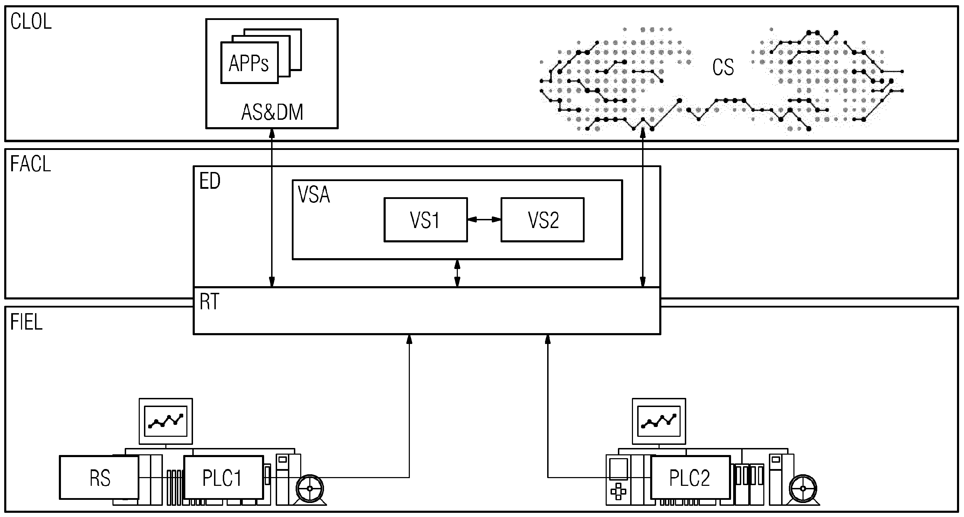

The figure shows the idea of an Edge platform and the main components. In the figure, on factory level FACL the Edge Device ED is located. The Edge Device ED brings computation power close to the shop-floor on field level FIEL and might be virtually any powerful computing device (i.e. IPC - Industrial PC) with connectivity to shop floor based on industrial controllers PLC1, PLC2 (in an industrial network) on the one hand, and cloud-based clients like cloud services or cloud systems CS or further Edge Devices (not shown) on the other hand. The first named connectivity is sometimes called "southbound", and the latter one "northbound".

When an Edge platform is being provided by means of an Edge Device ED, there will be an Edge runtime RT running on the Edge Device (e.g. Unix/Linux based). All Edge applications ("apps") should run as containers on the top of the runtime RT, modularizing the whole solution. The Edge applications may vary from only pre-processing data to more complex applications such as simulation or AI (artificial intelligence) algorithms. The Edge runtime RT also shall provide north bound and south bound connectivity layers (North bound: connectivity layer to cloud applications; South bound: connectivity layer to the factory floor).

The platform also provides ready-to-use connectors that allow the Edge Device ED to collect data from any PLC supplier at the shop-floor (southbound connectivity) on field level FIEL, and send data to any cloud system or cloud service (northbound connectivity). Data exchange with other Edge Devices of the same or different factories is also possible.

Any Edge Device ED can send data to a cloud application or cloud services CS (on cloud level CLOL) based on ready-to-use connectors on the Edge runtime RT. The system also provides an app management AS&DM (App-Store and Device Management), the app management AS&DM hosting or at least accessing several applications APPs ready-to-use for Edge Devices ED.

Based on the Edge concept presented above, the system provides a containerized core application VSA (Virtual Sensor Application) to be published on the Edge App Management AS&DM service, allowing to be downloaded to any Edge Device ED at the factory level FACL. This application VSA can be named "Virtual Sensor App" or "FMI Edge App" or in short just "app". The app VSA hosts at least one model container and thus establishes at least one virtual sensor VS1, VS2. The model container establishing the virtual sensors VS1, VS2 comprise preferably FMI compliant FMU files, each containing a virtual sensor definition and executable runtime code.

As described, the Virtual Sensor App (FMI Edge App) VSA is preferably based on the FMI (Functional Mockup Interface) standard defined according to https://fmi-standard.org/. One of the challenges is that there are different tools and languages involved in the simulation environment, which makes it difficult to the OEM to integrate different models from different suppliers. Thus, the FMI provides a standard that allows the simulation tools compliant with the standard to export the simulation models to an FMU file (Functional Mockup Unit) which consists in a zip (*.fmu) file containing:
- modelDescription.xml,
- Implementation in source and/or binary form, and
- Additional data and functionality.

The FMI standard covers model exchange and co-simulation options but in the current context only the Co-Simulation mode is used. Co-Simulation mode means that the FMU file exported from the simulation tool will be provided with the solver code (source code or "executables") embedded in the *.fmu file.

The Virtual Sensor App VSA provided is focused on multiphysics simulation and it is based on three pillars:
- Web Interface: The web interface provided by the app VSA running on the Edge Device ED will allow the user to select an FMU file from any simulation tool compliant with FMI standard, it will show the complete model structure imported for checking, setting up the simulation, mapping the signals from the controllers PLC1, PLC2 at the shop-floor on field level FIEL (available at the Edge layer runtime RT, through the southbound connectivity layer) as inputs to the model and finally allow the user to run the model and monitor the outputs.
- Core Application: The core application of the app VSA enables to each FMU file imported the whole interpretation of the FMU file and orchestrate the data exchange between the shop floor data collected from the shop-floor through the southbound connectivity layer and the model instance running on the Edge. The core application VSA also manages interconnection between multiple virtual sensors VS1, VS2 and other program code or "glue code" (not shown)
- Edge Platform integration: The FMI app VSA described before is totally integrated into the Edge platform, which allows the app to take advantage of the features provided by the platform (Edge Device ED). One of the most important features provided by the platform are the ready-to-use connectors on the southbound connectivity layer, which allows the app VSA to collect data from different PLCs from different suppliers.

The app VSA also provides a programming tool embedded into the application which provides a browser-based editor with a palette of nodes and the palette shows the new simulation model (virtual sensor) each time a new FMU file is imported. The browser-based editor makes it easy to wire together flows using the nodes available in the palette that can be deployed to its runtime on the Edge Device ED, including the simulation models' (virtual sensors) FMU imported nodes. This gives flexibility to users to wire together in the same flow different simulation models created in different simulation tools, exported to FMU and imported to the app VSA.

The browser-based solution and the programming tool embedded also allows the user to add different script functions and even Python scripts that enable the possibility to use different strategies of virtual sensing, including the state observer approach (i.e. Extended Kalman Filter approach for non-linear systems).

The app VSA allows the user to run simulation models (digital twins) close to the shop floor, on the Edge layer. Based on the FMI standard and bringing the FMI standard to the Edge layer, the app VSA allows the user to import simulation models from different tools compliant with FMI and wire them together in the same flow. The Edge layer southbound connectivity provides ready-to-use connectors to different PLC supplier's protocols. The app VSA allows to use any digital twin exported to FMU file and the northbound connectivity layer within the platform provide ready-to-use connectors to the cloud, which allows the app to feedback the engineering phase with the real production data for the simulation model. Running the simulation model and having access to PLC data via the southbound connectivity, the virtual sensor VS1, VS2 is established.

The key advantage is that virtual sensing by means of simulation and modeling is available for controllers on shop floor level (field level FIEL) with limited own computing power. Thus, virtual sensors VS1, VS2 are available for day-to-day production, not only for development or commissioning. Moreover, virtual sensor data is available to all local (e.g. controllers in the same factory) and, as well, global entities. The latter comprise other Edge Devices and thus their assigned local controllers / PLCs, and cloud-based information processing entities and cloud services CS as well.

Applying the FMI standard on the Edge layer, together with the virtual sensor approach and adding the IoT concept providing a wiring-flow browser-based tool embedded into the app, allows to wire together hardware devices, FMI simulation models, APIs and online services in a totally flexible way.

The architecture and technology applied in the app VSA are represented below. It is a containerized application using docker. The app has the interoperability concept as it may run the FMU file from any simulation tool compliant with the FMI standard. This means that the concept is open to any tool compliant with FMI including MATLAB/Simulink for instance.

The value chain today goes through Production design, Production Plan, Production Engineer and Services. Today there is a clear separation between the System Engineer who build the digital twin on the design phase and the Production Engineer and, as a result, the digital twin created is used only during the design phase until the Virtual Commissioning, but this is not transparent to the Production Engineer due to the communication barrier and different focus of both different Personnel Profiles. This app can break this barrier, bringing the Digital Twin to the production phase and generating additional values to the Production Engineers and to the whole customers business.

## Claims

1. A method for providing a virtual sensor (VS1, VS2) for an industrial control system,
the industrial control system comprising at least one industrial controller (PLC1, PLC2), the industrial controller (PLC1, PLC2) being connected to at least on real sensor (RS),
the method comprising:
- combining a virtual sensor model description for the virtual sensor (VS1, VS2) and executable program code in a model container,
- loading the model container onto an industrial Edge Device (ED), the industrial Edge Device (ED) being connected to the at least one industrial controller (PLC1, PLC2),
- obtaining, from the industrial controller (PLC1, PLC2), sensor data of the at least one real sensor (RS),
- calculating, by executing the program code, virtual sensor data from the real sensor data, and
- providing the virtual sensor data to at least one target component of the industrial control system.

2. The method of claim 1,
comprising:
- establishing a runtime environment (RT) on the industrial Edge Device (ED),
- loading a core application (VSA) to the runtime environment (RT),
- loading at least one model container to the core application (VSA), and
- execution of the executable program code of the at least one model container.

3. The method of one of the preceding claims,
using, for the model container, a FMI compliant FMU file, the FMU file supporting the FMI co-simulation mode.

4. The method of one of the preceding claims,
providing the virtual sensor data to a further industrial Edge Device as target component, the further industrial Edge Device forwarding the virtual sensor data or information derived therefrom to a further industrial controller (PLC1, PLC2) connected to this further industrial Edge Device.

5. The method of one of the preceding claims,
transferring the virtual sensor data to the at least one industrial controller (PLC1, PLC2), the at least one industrial controller (PLC1, PLC2) using the virtual sensor data for controlling an industrial process or an industrial factory.

6. A system for providing a virtual sensor (VS1, VS2) for an industrial control system,
the industrial control system comprising at least one industrial controller (PLC1, PLC2), the industrial controller (PLC1, PLC2) being connected to at least on real sensor (RS),
the system comprising an industrial Edge Device (ED), the industrial Edge Device (ED) connected to the at least one industrial controller (PLC1, PLC2),
the industrial Edge Device (ED) having a runtime environment (RT) for hosting at least one model container, the model container combining a virtual sensor model description for the virtual sensor and executable program code, the runtime environment (RT) being setup for execution of the executable program code,
the runtime environment (RT) having access to the real sensor data,
the system configured to:
- obtain real sensor data of the real sensor (RS);
- calculate, from the real sensor data, virtual sensor data by executing the program code; and
- provide the calculated sensor data to a target component of the industrial control system.

7. The system of claim 6,
the model container being a FMI compliant FMU file, the FMU file supporting the FMI co-simulation mode.

8. The system of claim 6 or 7,
the target component being one of the industrial controllers (PLC1, PLC2) of the industrial control system, the industrial controller (PLC1, PLC2) using the virtual sensor data for control of an industrial process or an industrial factory.

9. The system of one of claims 6 - 8,
the target component being a further industrial Edge Device, the further industrial Edge Device being set up to forward the virtual sensor data or information derived therefrom to a further industrial controller connected to this further industrial Edge Device.

10. The system of one of claims 6 - 9,
the runtime environment (RT) supporting a core application (VSA) installed on the industrial Edge Device (ED).
